(19) Europäisches Patentamt
European Patent Office
Office européen des brevets

(11) **EP 2 183 865 B1**

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(21) Anmeldenummer: **08787237.0**

(22) Anmeldetag: **14.08.2008**

(51) Int Cl.:
***H04B 10/158*** (2006.01)

(86) Internationale Anmeldenummer:
**PCT/EP2008/060707**

(87) Internationale Veröffentlichungsnummer:
**WO 2009/024536 (26.02.2009 Gazette 2009/09)**

(54) **TRANSIMPEDANZVERSTÄRKERSCHALTUNG FÜR EINEN PHOTODETEKTOR**

TRANSIMPEDANCE AMPLIFIER CIRCUIT FOR A PHOTODETECTOR

CIRCUIT AMPLIFICATEUR À IMPÉDANCE TRANSVERSALE POUR PHOTODÉTECTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.08.2007 EP 07114572**

(43) Veröffentlichungstag der Anmeldung:
**12.05.2010 Patentblatt 2010/19**

(73) Patentinhaber: **Leica Geosystems AG**
**9435 Heerbrugg (CH)**

(72) Erfinder: **STUTZ, Reto**
**CH-9442 Berneck (CH)**

(74) Vertreter: **Kaminski Harmann**
**Patentanwälte AG**
**Landstrasse 124**
**9490 Vaduz (LI)**

(56) Entgegenhaltungen:
**EP-A- 0 720 311    US-A- 4 535 233**

**Beschreibung**

Die Erfindung betrifft eine Transimpedanzverstärkerschaltung zur Umwandlung eines Eingangsstroms in eine Ausgangsspannung nach dem Oberbegriff des Anspruchs 1 und einen Photodetektor nach dem Oberbegriff des Anspruchs 12.

Transimpedante Verstärkerschaltungen, auch Strom-SpannungsWandler oder I-U-Wandler genannt, werden in vielen Bereichen - wie beispielsweise für Photodetektoren - eingesetzt, um präzise Messungen kleiner Ströme zu ermöglichen. Idealerweise wandeln diese Verstärkerschaltungen einen Eingangsstrom in eine dazu proportionale Ausgangsspannung um. Das Verhältnis von Ausgangsspannung $U_{out}$ zu Eingangsstrom $I_{in}$ wird als Transimpedanz $Z_{EQ}=U_{out}/I_{in}$ bezeichnet, da die Wirkung einer Impedanz entspricht.

Ein bekannter möglicher Aufbau eines Transimpedanzverstärkers ist mit einem oder mehreren Verstärkerelementen und einem Rückkopplungszweig realisiert. Zum Beispiel kommen als Verstärkerelemente Operationsverstärker zum Einsatz, wobei eine übliche Operationsverstärker-Grundschaltung eine transimpedante Verstärkerschaltung darstellt. Bei dieser Grundschaltung ist der nichtinvertierende Eingang eines Operationsverstärkers mit einer Masse verbunden, und am invertierenden Eingang des Operationsverstärkers liegt ein Eingangsstromsignal an. Der Operationsverstärker ist mit einem ohmschen Widerstand gegengekoppelt, der den Verstärkungsfaktor bestimmt. Im Idealfall besteht die Transimpedanz $Z_{EQ}$ nur aus dem ohmschen Widerstand $Z_{EQ}=R$ und ist der Verstärkungsfaktor des Operationsverstärkers unendlich. Beim idealen Transimpedanzverstärker ist bemerkenswert, dass seine Funktion frequenzunabhängig ist. Der Signalstrom $I_{in}$ am Eingang und die Signalspannung $U_{out}$ am Ausgang könnten dann jede beliebige Frequenz haben, sodass beispielsweise Informationen aus einer mit Laser abgetasteten CD mit sehr hohen Frequenzen und somit sehr schnell ausgelesen werden könnten.

Beim realen Transimpedanzverstärker müssen hingegen einige nicht ideal funktionierende Faktoren berücksichtigt werden. Beispielsweise weist der ohmsche Rückkopplungswiderstand eine parasitäre Eigenkapazität auf, die wie eine parallel geschaltete Kapazität betrachtet werden kann. Diese parallele Kapazität begrenzt die Frequenzbandbreite des Rückkopplungswiderstands und somit die des Transimpedanzverstärkers.

Des Weiteren weisen als Stromquelle dienende Photodioden, Avalanche Photodioden (APD) oder CMOS-Sensoren eine parasitäre Kapazität auf, wobei insbesondere grossflächige APDs eine sehr hohe parasitäre Kapazität $C_{in}$ haben. Diese Kapazität $C_{in}$ hat zur Folge, dass keine hohen Bandbreiten zugelassen werden. Die Bandbreite BW ergibt sich wie folgt:

$$BW = \frac{1}{(2\pi C_{in}\, R_{EQ}\big/A)}\,,$$

wobei $R_{EQ}$ die Transimpedanz, A die Geradeausverstärkung des Verstärkerelements und somit $R_{EQ}/A$ die Eingangsimpedanz des Transimpedanzverstärkers darstellen.

Ausserdem hat der reale Transimpedanzverstärker noch ein weiteres, nicht ideal funktionierendes Element - das Verstärkerelement - wie z.B. der Operationsverstärker - selbst. So ist die reale Verstärkung, die durch das Verhältnis der Aus- zu der Eingangsspannung beschrieben wird, nicht unendlich hoch, wie es beim idealen Transimpedanzverstärker angenommen wird. Des Weiteren stellt die begrenzte Bandbreite des Verstärkerelements eines der Hauptlimiten eines Transimpedanzverstärkers dar.

Das Problem des realen Transimpedanzverstärkers ist also, dass seine Funktion frequenzabhängig ist. Es wäre aber wünschenswert, dass er frequenzunabhängig arbeitet, um die Information nicht zu verzerren. Dies gelingt in der Realität allerdings nur in einem begrenzten Frequenzintervall, wobei durch geringere Rückkopplungswiderstände eine vom Widerstandswert und von der Parallelkapazität antiproportional abhängige, höhere Bandweite, in der der Transimpedanzverstärker näherungsweise frequenzunabhängig arbeitet, realisierbar wäre.

Allerdings bedingen geringere Rückkopplungswiderstände ein höheres Stromrauschen $I_{noise}$, das wie folgt vom Widerstandswert abhängt:

$$I_{noise} = \sqrt{\frac{4kT}{R_f}}\,,$$

wobei $R_f$ den Rückkopplungswiderstand, T die absolute Temperatur und k die Boltzmann-Konstante darstellt. Das durch den Rückkopplungswiderstand bedingte Stromrauschen ist nachteilig, da es den z.B. durch eine Photodiode generierten Eingangsstrom, der eigentlich durch den Transimpedanzverstärker in eine gut messbare Ausgangsspannung umgewandelt werden soll, überlagert und nicht vom diesem unterschieden werden kann.

Durch die Wahl eines hohen Rückkopplungswiderstandes könnte nun zwar ein geringes Stromrauschen erreicht werden. Ein hoher Rückkopplungswiderstand bedingt allerdings - wie oben erwähnt - eine verhältnismässig kleine Bandbreite, in welcher der Transimpedanzverstärker die gewünschten frequenzunabhängigen Eigenschaften aufweist. So ist es wünschenswert, einen möglichst optimalen sog. Bandbreiteversus-Rauschen-Kompromiss zu schliessen.

Beispielsweise ist bekannt, den Rückkopplungswiderstand durch mehrere Widerstände, welche in Serie geschaltet sind, zu ersetzen. Diese Technik wird jedoch ziemlich schnell durch die parallelen Kapazitäten zur Masse und die sich ergebende Länge der Widerstandskette limitiert.

Ebenso ist nach dem Stand der Technik das Ersetzen des Rückkopplungswiderstandes durch ein Rückkopplungsnetzwerk, insbesondere ein T-förmiges Netzwerk, bekannt, das beispielsweise ausschliesslich mit Widerständen aufgebaut ist. Bekannt sind auch T-förmige Rückkopplungsnetzwerke mit ausschliesslich kapazitiven Komponenten, was beispielsweise in der Offenlegungsschrift WO 02/46779 A1 geoffenbart ist. Eine Übersicht über Verstärkerschaltungen des Stands der Technik bietet ausserdem "Photodiode Amplifiers" von Jerald G. Graeme, Verlag McGraw-Hill, USA 1996, Seiten 21 bis 30.

Die Offenlegungsschrift US 5,455,705 beschreibt einen Transimpedanzverstärker für einen optischen Empfänger mit einem einen Strom generierenden Photodetektor und einem Integrierglied zum Empfangen des Stroms, wobei das Integrierglied einen Kondensator aufweist. Der Ausgang des Integrierglieds ist an eine Verstärkerstufe angeschlossen, die zum Bereitstellen einer vom Ausgang des Integrierglieds abhängigen Spannung ausgebildet ist. Ein Rückkopplungswiderstand ist zwischen den Ausgang der Verstärkerstufe und den Eingang des Integrierglieds geschaltet und bestimmt somit sowohl die nominale Verstärkung als auch - in Verbindung mit dem Kondensator - die Bandbreite des Transimpedanzverstärkers. Zum erhöhen der Bandbreite wird vorgeschlagen, den Verstärkungsfaktor der Verstärkerstufe zu erhöhen, insbesondere wobei durch einen veränderbaren Widerstand in der Verstärkerstufe der Verstärkungsfaktor einstellbar ausgebildet ist. Ein Stromrauschen wird in dieser Offenlegungsschrift jedoch nicht berücksichtigt.

Ein weiteren Transimpedanz verstärker nach dem Stand der Technik ist aus der US-A-4535233 bekannt.

Des Weiteren ist bekannt, dass Transimpedanzverstärker mit hoher Transimpedanz Ausgangssignale mit hohen Amplituden erzeugen, die sich als nachteilig erweisen können. Zusätzlich benötigen hohe Transimpedanzen hohe Leerlaufverstärkungen des Verstärkerelementes.

Wünschenswert ist daher eine Transimpedanzverstärkerschaltung mit einem breiten Frequenzband und einem geringem Rauschen sowie mit einer verhältnismässig geringen Transimpedanz $R_{EQ}$, insbesondere mit einem von der Transimpedanz abhängigen Stromrauschen von $I_{noise} <$ Wurzel $(4kT/R_{EQ})$.

Insbesondere bei Transimpedanzverstärkerschaltungen, die in Photodetektoren für Laserentfernungsmesser verwendet werden, ist eine nicht verzerrende und ein geringes Rauschen aufweisende Umwandlung für unterschiedliche und insbesondere verhältnismässig hohe Frequenzen eines durch ein photosensitives Empfangselement generierten Eingangsstroms in eine messbare Ausgangsspannung wünschenswert.

Eine Aufgabe der Erfindung ist daher das Bereitstellen einer verbesserten Transimpedanzverstärkerschaltung.

Eine weitere Aufgabe der Erfindung ist das Bereitstellen einer eine geringe Komplexität aufweisenden Transimpedanzverstärkerschaltung mit geringem Stromrauschen in Verbindung mit einer verhältnismässig geringen Transimpedanz und/oder einem verhältnismässig breiten Frequenzintervall, in welchem ein Eingangsstrom näherungsweise frequenzunabhängig in eine messbare Ausgangsspannung umgewandelt werden kann.

Eine weitere Aufgabe ist das Bereitstellen eines Photodetektors, insbesondere für Laserentfernungsmesser nach dem Phasenmess- oder Pulslaufzeitprinzip, wobei ein durch ein photosensitives Empfangselement in Abhängigkeit von der Bestrahlung desselben erzeugtes Stromsignal in verbesserter Weise für verschiedene und insbesondere auch für verhältnismässig hohe Frequenzen, sowie mit geringem Aufwand und wenig komplexer Schalttechnik, in eine davon abhängige messbare Ausgangsspannung umgewandelt wird.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Eine erfindungsgemässe Transimpedanzverstärkerschaltung zum Umwandeln eines Eingangsstroms in eine Ausgangsspannung $U_{out}$ ist mit einem Verstärkerelement mit Signaleingang und Ausgang und einem T-förmigen Rückkopplungsnetzwerk aufgebaut.

Das T-förmige Rückkopplungsnetzwerk weist einen ersten, einen zweiten und einen dritten Zweig auf, die jeweils zu einer Seite hin mit einem Knotenpunkt K verbunden sind. Der erste Zweig, der andererseits mit dem Ausgang des Verstärkerelements verbunden ist, weist einen Rückkopplungswiderstand $R_1$ auf. Dieser Rückkopplungswiderstand $R_1$ bedingt ein Stromrauschen $I_{noise}$, das durch

$$I_{noise,R_1} = \sqrt{\frac{4kT}{R_1}}$$

gegeben ist, wobei T die absolute Temperatur und k die Boltzmann-Konstante darstellt.

Erfindungsgemäss wird nun der durch den Rückkopplungswiderstand fliessende Strom $I_{R1}$ am Knotenpunkt K kapazitiv aufgeteilt, sodass nur ein Teil dieses Stroms - und somit auch nur ein Teil des Rauschstroms - zum Eingang des Verstärkerelements rückgeführt wird. Beispielsweise kann nun durch diese Stromteilung - betrachtet im Verhältnis zur Transimpedanz der Schaltung - eine rauschärmere Verstärkerschaltung realisiert werden.

Dazu weist der zweite Zweig des T-förmigen Rückkopplungsnetzwerkes mindestens eine kapazitive Komponente $C_2$ und der dritte Zweig, der zum Signaleingang des Verstärkerelements führt, mindestens eine kapazitive Komponente $C_3$ auf.

Insbesondere kann nun ein Rückkopplungswiderstand $R_1$ mit geringem Widerstandswert verwendet werden, sodass dessen parasitäre Parallelkapazität $C_{R1}$ weniger limitierend bei höheren Frequenzen wirkt und somit höhere Bandbreiten, insbesondere für hohe Frequenzen, erzielbar sind. Das durch einen geringen Widerstandswert von $R_1$ bedingte höhere Stromrauschen kann durch die kapazitive Stromteilung kompensiert oder sogar überkompensiert werden, sodass als Eingangsstromrauschen $I_{noise}$ ein geringeres Rauschen erreichbar ist als eigentlich durch die Transimpedanz gegeben sein sollte, nämlich Wurzel($4kT/R_{EQ}$).

Allerdings können die durch die erfindungsgemässe kapazitive Stromteilung am Knotenpunkt K erreichbaren Vorteile nur durch einen Kompromiss realisiert werden. So fliesst bei einer Transimpedanzverstärkerschaltung gemäss der Erfindung ein höherer Strom vom Verstärkerelement in das Rückkopplungsnetzwerk, wenn ein Widerstand $R_1$ mit geringem Widerstandswert verwendet wird. Insbesondere bei Transimpedanzverstärkern für Photodetektoren von Entfernungsmessern stellt dies jedoch kein Problem dar. Zusätzlich sind gerade im Bereich von Photodetektoren von Entfernungsmessern die erfindungsgemäss ermöglichten Eigenschaften, nämlich eine hohe Bandbreite, insbesondere für verhältnismässig hohe Frequenzen, und ein geringes Rauschen, von Vorteil.

Beispielsweise weist der dritte Zweig einen Widerstand $R_3$ auf, wobei dessen Parallelkapazität $C_{R3}$ mindestens anteilig als Kapazität $C_3$ fungiert. Zusätzlich kann der dritte Zweig einen Kondensator mit der Kapazität $C_{K3}$ aufweisen, der parallel zum Widerstand $R_3$ geschaltet ist, sodass sich als Kapazität $C_3$ des dritten Zweigs $C_3=C_{K3}+C_{R3}$ ergibt.

Je nach Wahl der verwendeten Komponenten, insbesondere der Kapazitäten $C_2$ und $C_3$, der Widerstände $R_1$ und $R_3$, sowie der weiteren Komponenten, die zur praktischen Realisierung einer Transimpedanzverstärkerschaltung üblicherweise verwendet werden, kann nun ein Transimpedanzverstärker je nach gewünschten Eigenschaften aufgebaut werden.

Insbesondere weist der in Abhängigkeit der Frequenz gegebene Verstärkungsfaktorverlauf der erfindungsgemässen Schaltung, der durch die Transimpedanz bestimmt ist, zwei Pole bei den Frequenzen $f_L$ und $f_H$ auf, wobei im Frequenzbereich zwischen den Frequenzen $f_L$ und $f_H$ ein im Wesentlichen konstanter Verstärkungsfaktor gegeben ist und somit der Transimpedanzverstärker in diesem Frequenzbereich wie gewünscht arbeitet.

Beispielsweise kann nun durch Variation des Widerstands $R_3$ für Frequenzen kleiner $f_L$ der Verstärkungsfaktorverlauf angepasst werden, wobei sich dabei jeweils auch das im Verhältnis zur Transimpedanz $R_{EQ}$ betrachtete Eingangsrauschen verändert.

Auf eine erfindungsgemässe Ausführungsform, die mit einem parallel geschalteten Widerstand $R_3$ im dritten Zweig des Rückkopplungsnetzwerks ausgeführt ist, wird beispielhaft in den Figuren 2 und 3 näher eingegangen. Dabei kann z.B. eine im Verhältnis zum Eingangsstromrauschen höhere Bandbreite realisiert werden. Des Weiteren ist eine spezielle Ausführungsform - ohne Widerstand im dritten Zweig des Rückkopplungsnetzwerks - in den Figuren 5 und 6 und der dazugehörigen Beschreibung näher erläutert, wobei ein verhältnismässig geringes Stromrauschen realisierbar ist.

Der Erfindungsgegenstand wird nachfolgend anhand von in den Figuren schematisch und rein prinzipiell dargestellten konkreten Ausführungsbeispielen beispielhaft näher beschrieben, wobei auch auf weitere Vorteile der Erfindung eingegangen wird. Im Einzelnen zeigen:

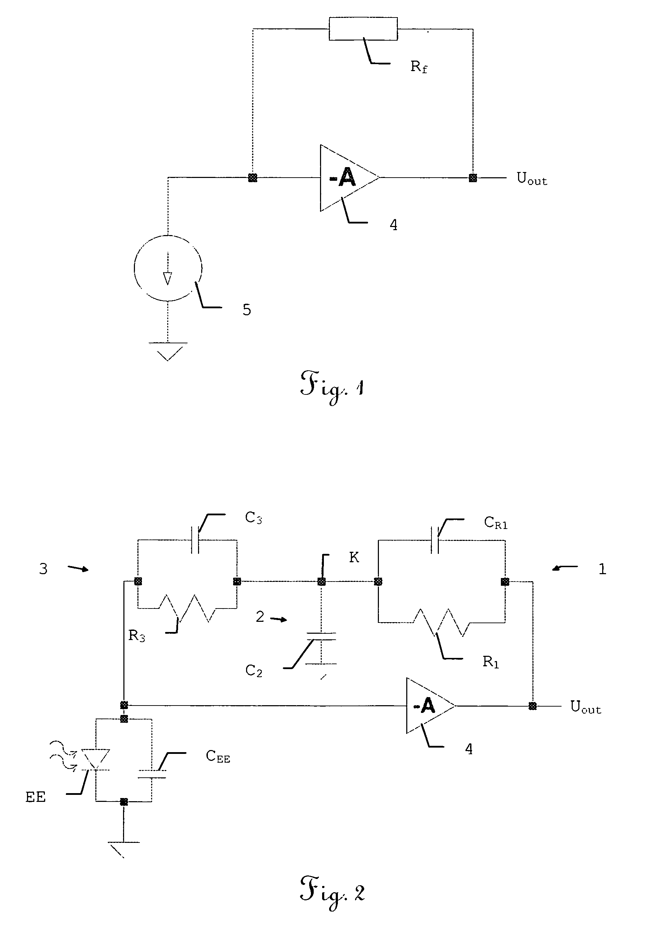

Fig. 1    eine Transimpedanzverstärker-Grundschaltung nach dem Stand der Technik;

Fig. 2    eine erste Ausführungsform einer erfindungsgemässen Transimpedanzverstärkerschaltung;

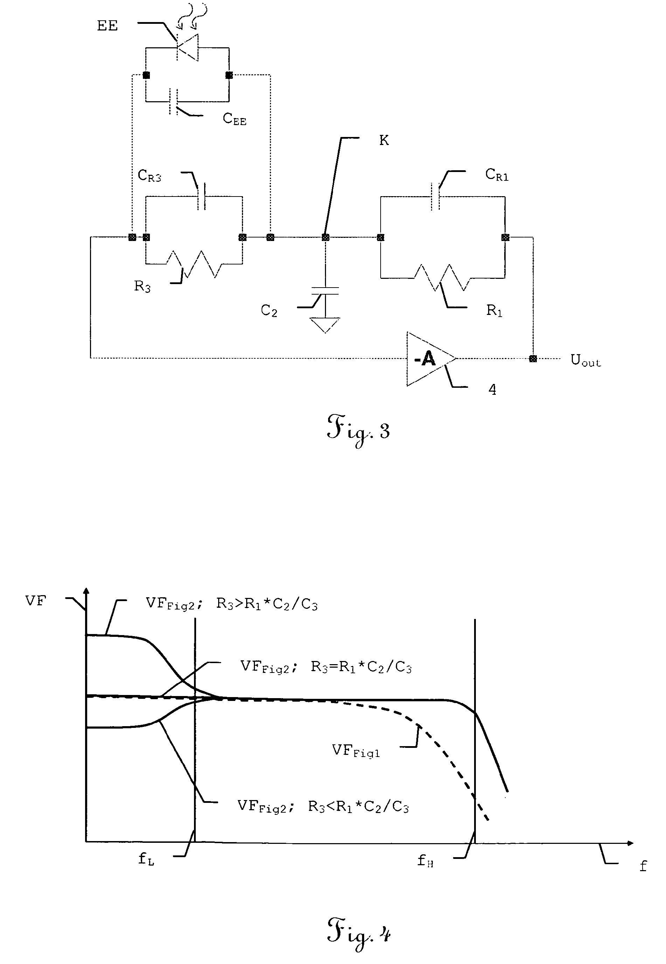

Fig. 3    eine zweite Ausführungsform einer erfindungsgemässen Transimpedanzverstärkerschaltung;

Fig. 4    ein Verstärkungsfaktor-Frequenz-Diagramm einer erfindungsgemässen Transimpedanzverstärkerschaltung;

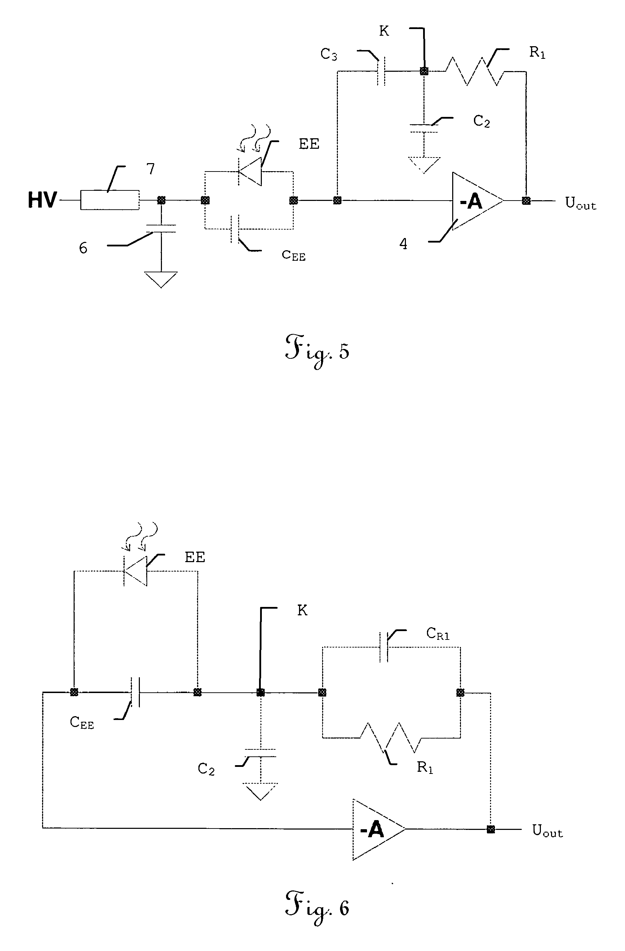

Fig. 5    eine spezielle Ausführungsform der Transimpedanzverstärkerschaltung aus Fig.2;

Fig. 6    eine spezielle Ausführungsform der Transimpedanzverstärkerschaltung aus Fig.3;

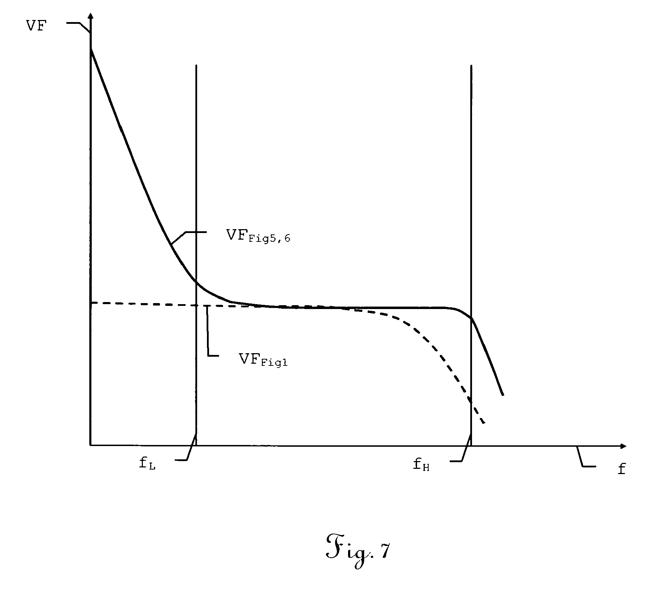

Fig. 7    ein Verstärkungsfaktor-Frequenz-Diagramm für eine Transimpedanzverstärkerschaltung nach Figur 5 oder 6;

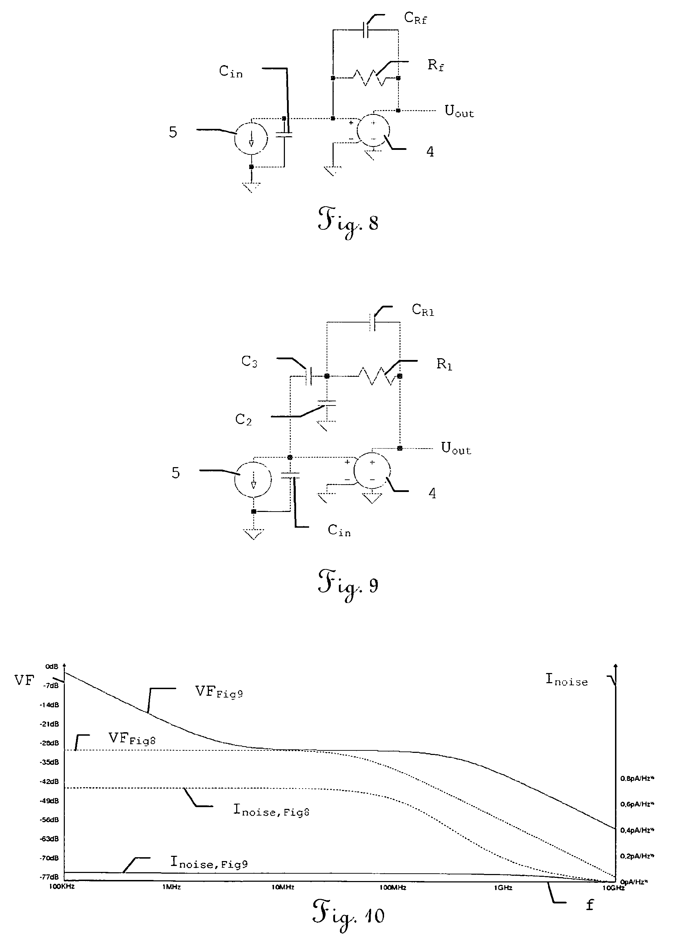

Fig. 8    ein nach dem Stand der Technik bekannter Simulationsaufbau einer Transimpedanzverstärkerschaltung;

Fig. 9    ein erfindungsgemässer Simulationsaufbau einer Transimpedanzverstärkerschaltung;

Fig. 10    ein Verstärkungsfaktor-Frequenz-Diagramm für die Simulationsschaltungen aus den Figuren 8 und 9;

Fig. 11    eine weitere erfindungsgemässe Ausführungsform der Transimpedanzverstärkerschaltung mit einem zweiten Rückkopplungszweig;

Fig. 12    ein Verstärkungsfaktor-Frequenz-Diagramm für eine Transimpedanzverstärkerschaltung nach Figur 11; und

Fig. 13    ein Verstärkungsfaktor-Frequenz-Diagramm für das zweite Verstärkerelement aus Figur 11.

Figur 1 zeigt eine übliche, nach dem Stand der Technik bekannte Transimpedanzverstärkerschaltung mit einem Verstärkerelement 4 und einem Rückkopplungswiderstand $R_f$. Dabei wird ein durch eine Stromquelle 5 erzeugtes Eingangsstromsignal anhand der Schaltung in eine messbare Ausgangsspannung $U_{out}$ umgewandelt.

Das Verhältnis von Ausgangsspannung $U_{out}$ zu Eingangsstrom $I_{in}$ wird als Transimpedanz Z mit $Z=U_{out}/I_{in}$ bezeichnet, da es wie eine Impedanz wirkt.

Ideal betrachtet besteht die Transimpedanz $Z_{EQ}$ dieser Schaltung nur aus dem ohmschen Rückkopplungswiderstand $Z_{EQ}=R_f$ und ist unabhängig von der Frequenz.

In der Realität weist allerdings z.B. der Rückkopplungswiderstand eine parasitäre Parallelkapazität auf, wodurch die bereits Eingangs in der Beschreibung des Standes der Technik diskutierten Nachteile entstehen.

Als Stromeingangsrauschen $I_{noise}$ ergibt sich bei der dieser Schaltung:

$$I_{noise} = \sqrt{\frac{4kT}{R_f}} \ .$$

Da das Rauschen mit ansteigendem Widerstand $R_f$ abnimmt, müsste ein hoher Rückkopplungswiderstand gewählt werden, um ein geringes Rauschen zu erhalten. Allerdings lassen hochohmigere Widerstände - bedingt durch ihre Parallelkapazitäten - geringere Bandbreiten zu.

Des Weiteren entstehen bei Transimpedanzverstärkern mit hohem Rückkopplungswiderstand und somit hoher Transimpedanz auch hohe Spannungsamplituden, die sich bei einigen Anwendungen als nachteilig erweisen.

Figur 2 beschreibt eine erste Ausführungsform eines erfindungsgemässen Transimpedanzverstärkers mit einem - im Verhältnis zur Transimpedanz und zum Eingangsrauschen - breiten Frequenzintervall, in dem die Transimpedanz näherungsweise konstant ist.

Die dargestellte Transimpedanzverstärkerschaltung wandelt einen durch ein photosensitives Empfangselement EE generierten Strom in eine damit verknüpfte Ausgangsspannung $U_{out}$ um.

Dazu weist die Transimpedanzverstärkerschaltung ein Verstärkerelement 4 und ein T-förmiges Rückkopplungsnetzwerk mit drei Zweigen auf, die an einem Knotenpunkt K verbunden sind. Der erste Zweig 1 des Rückkopplungsnetzwerkes ist mit einem Rückkopplungswiderstand $R_1$ mit der Parallelkapazität $C_{R1}$ aufgebaut und mit dem Ausgang des Verstärkerelements 4 verbunden. Der zweite Zweig 2 weist einen Kondensator $C_2$ auf und ist mit einer Masse verbunden. Der dritte Zweig 3 weist einen Widerstand $R_3$ und eine dazu parallele Kapazität $C_3$ auf.

Die Kapazität $C_3$ kann beispielsweise durch die Parallelkapazität $C_{R3}$ des Widerstands $R_3$ gegeben sein. Jedoch kann zusätzlich auch ein Kondensator mit der Kapazität $C_{K3}$ parallel zum Widerstand geschaltet werden, sodass sich als Kapazität $C_3$ im dritten Zweig ergibt $C_3=C_{K3}+C_{R3}$.

Durch Variation des Widerstands $R_3$ kann nun für Frequenzen kleiner $f_L$, wobei $f_L$ beispielsweise durch 10MHz gegeben sein kann, der Verstärkungsfaktorverlauf angepasst werden, wobei sich dabei jeweils auch das im Verhältnis zur Transimpedanz $R_{EQ}$ betrachtete Eingangsrauschen verändert.

Insbesondere können die Widerstände $R_1$ und $R_3$ und die Kapazitäten $C_2$ und $C_3$ so gewählt werden, dass gilt:

$$\frac{R_1}{R_3} = \frac{C_3}{C_2} \, ,$$

wobei $R_1$ mit einem entsprechend kleinen Widerstandswert gewählt werden kann, sodass durch seine Parallelkapazität keine Limitierung bei höheren Frequenzen entsteht und somit ein Abfall der Verstärkung bis zu einer Frequenz $f_H$, beispielsweise 100MHz, hinausgezögert werden kann. Dabei ist für $R_1/R_3=C_3/C_2$ der Verstärkungsfaktorverlauf auch für Frequenzen kleiner $f_L$ weiter konstant, sodass mit dieser Schaltung dann für alle Frequenzen bis $f_H$ eine näherungsweise konstante Verstärkung eines Eingangsstroms realisierbar ist.

Ein Stromeingangsrauschen $I_{noise}$ verursacht durch die Widerstände ergibt sich dabei als:

$$I_{noise} = \sqrt{\frac{4kT}{R_1 + R_3}} \; .$$

Dieses durch die Widerstände $R_1$ und $R_3$ bedingte Stromeingangsrauschen ist gleich dem Stromeingangsrauschen, das durch eine äquivalente Schaltung des Standes der Technik nach Figur 1 gegeben wäre - jedoch bei einer erfindungsgemäss ermöglichten höheren Frequenzbandbreite, in welcher die gewünschte konstante Umwandlung eines Eingangsstroms in eine Ausgangsspannung erreicht werden kann.

Je nach Anforderungen an die Schaltung kann jedoch der Widerstand $R_3$ auch geringer oder höher als $R_1*C_2/C_3$ gewählt werden, sodass der Verstärkungsfaktor für Frequenzen kleiner $f_L$ entsprechend abfällt bzw. ansteigt. Dabei wird ebenso das Stromeingangsrauschen entsprechend im einen Fall erhöht und im anderen Fall erniedrigt.

Der Verstärkungsfaktorverlauf VF in Abhängigkeit der Frequenz f ist für diese drei Fälle - $R_1/R_3=C_3/C_2$; $R_3<R_1*C_2/C_3$ und $R_3>R_1*C_2/C_3$ - in einem Diagramm Figur 4 aufgezeigt.

Durch diese Schaltungsanordnung kann nun erreicht werden, dass die parasitäre Parallelkapazität $C_{R1}$ des Widerstands $R_1$ nicht mehr limitierend wirkt und somit eine höhere Bandbreite - insbesondere für hohe Frequenzen - wie bei der in Figur 1 gezeigten Schaltung - betrachtet im Verhältnis zum Eingangsrauschen - realisierbar ist.

Die durch die Erfindung erzielbaren Vorteile werden allerdings durch einen - im Vergleich zu Lösungen des Standes der Technik - höheren Strom ermöglicht, der vom Verstärkerelement 4 in das Rückkopplungsnetzwerk fliesst, was jedoch für viele Anwendungen kein Problem darstellt.

Je nach Anwendungsbereich der Schaltung kann ein Fachmann diese entsprechend auslegen und konfigurieren.

So kann die Schaltungsanordnung mit verschiedenen Verstärkerelementen 4 realisiert werden. Beispielsweise können Operationsverstärker, diskret aufgebaute Verstärker oder sonstige nach dem Stand der Technik bekannte Verstärkerelemente verwendet werden. Insbesondere können dabei High Electron Mobility Transistoren (HEMT) als Eingangstransistoren des Verstärkerkerns zum Einsatz kommen, welche besonders rauscharm sind.

Die gezeigte Transimpedanzverstärkerschaltung kann diskret oder integriert aufgebaut werden. Zusätzlich können in einer praktischen Realisierung an verschiedenen Stellen Entkopplungskondensatoren eingebaut werden.

Anstelle einer Masse, an die z.B. der zweite Zweig angeschlossen ist, kann es sich auch um ein anderes Bezugspotential handeln kann, das für Wechselstromsignale konstant ist.

Z.B. kann zusätzlich, da der erste und zweite Zweig eine verhältnismässig geringe Impedanz aufweisen, ein Analogswitch verwendet werden, um die Kapazität zu erhöhen und somit die Transimpedanz variierbar zu gestalten.

Des Weiteren könnten die Widerstände $R_1$ und $R_3$ auch durch Transistoren realisiert werden.

Das photosensitive Empfangselement EE, das z.B. als Photodiode, Avalanche Photodiode (APD), Phototransistor, Zeilen- oder Flächenanordnung von APDs oder Anordnung von CMOS-Sensoren ausgebildet sein kann, weist eine parallele Eigenkapazität $C_{EE}$ auf und ist so geschaltet, dass das generierte Stromsignal zum Signaleingang des Verstärkerelements 4 geleitet wird. Je nach verwendetem Empfangselement EE kann dieses, wie in Figur 3 dargestellt, entweder an einer Masse oder aber an einer Hochspannung, welche z.B. zu einer Masse mit einem Kondensator kurzgeschlossen ist, anliegen, wie z.B. bei Verwendung einer APD. Diese beiden unterschiedlichen Modi, nämlich mit oder ohne Anlegen einer Hochspannung, sind dem Fachmann bekannt und sind im Allgemeinen geringfügig unterschiedlich zu berechnen.

Insbesondere ist der Photodetektor mit der Transimpedanzverstärkerschaltung als Empfangsvorrichtung eines Entfernungsmessers nach dem Pulslaufzeit- oder Phasenmessprinzip geeignet. Die bei einer Entfernungsmessung in Richtung eines Zieles ausgesendeten und dort reflektierten optischen Strahlen können nun durch den erfindungsgemässen Photodetektor in einem breiten Frequenzband empfangen und verbessert und unverzerrt in eine messbare Ausgangsspannung umgewandelt werden. Da erfindungsgemäss ein Messen von mit einer höheren Frequenz modulierten Strahlen ermöglicht wird, kann eine exaktere Entfernungsmessung ermöglicht werden.

Der erfindungsgemässe Photodetektor kann dabei sowohl single-ended, wie in den Figuren dargestellt, als auch differentiell aufgebaut werden, wobei beispielsweise ein differentielles Verstärkerelement mit zwei erfindungsgemässen Rückkopplungsnetzwerken an beide Pins eines Empfangselements angeschlossen wird.

Figur 3 zeigt eine prinzipiell ähnliche Schaltungsanordnung wie Figur 2. Allerdings ist in der in Figur 3 dargestellten Ausführungsform das photosensitive Empfangselement EE im dritten Zweig parallel zum Widerstand $R_3$ geschaltet, sodass die Eigenkapazität $C_{EE}$ des Empfangselements EE als Kapazität des dritten Zweigs fungiert. Insbesondere bei Verwendung einer grossflächigen APD als Empfangselement, z.B. mit einem Durchmesser von >200$\mu$m, wobei diese eine verhältnismässig hohe Eigenkapazität $C_{EE}$ aufweist, kann diese Ausführungsform des erfindungsgemässen Transimpedanzverstärkers gewählt werden.

Die für die kapazitive Stromteilung zu berücksichtigende Kapazität $C_3$ des dritten Zweigs setzt sich nun also aus der Eigenkapazität $C_{EE}$ des Empfangselements und der Parallelkapazität $C_{R3}$ des Widerstands $R_3$ sowie insbesondere einem zusätzlich parallel zum Widerstand $R_3$ geschalteten Kondensator mit der Kapazität $C_{K3}$ zusammen.

Das beispielhaft in den Figuren durch das Standardsymbol einer Photodiode dargestellte Empfangselement EE kann, wie dem Fachmann bekannt, auch umgekehrt geschaltet werden und in sämtlichen bekannten und dafür geeigneten Ausbildungen ausgeführt sein.

Figur 4 zeigt ein Diagramm, in dem der Verstärkungsfaktor VF in Abhängigkeit der Frequenz f schemenhaft aufgetragen ist, wobei die durchgezogenen Linien die Verstärkungsfaktoren $VF_{Fig2}$ für eine erfindungsgemässe Transimpedanzverstärkerschaltung nach Figur 2 für verschieden gewählte Widerstände $R_3$ und die gestrichelte Linie den Verstärkungsfaktor $VF_{Fig1}$ der in Figur 1 gezeigten, nach dem Stand der Technik bekannten Schaltung aufzeigt.

Die Transimpedanz der erfindungsgemässen Transimpedanzverstärkerschaltung in der in den Figuren 2 oder 3 gezeigten Alternative ist auch noch für höhere Frequenzen bis zur Frequenz $f_H$ näherungsweise konstant. Somit ist also erfindungsgemäss bei vergleichbarem Eingangsrauschen eine höhere Bandbreite wie bei der bisher bekannten Schaltung nach Figur 1 realisierbar.

Im Ausführungsbeispiel in Figur 5 ist das Empfangselement EE als Avalanche Photodiode (APD) ausgebildet, an welche eine Hochspannung HV angebracht ist. Dabei schliesst ein Kondensator 6 einen Pin der APD mit der Verstärkermasse im relevanten Frequenzbereich kurz. Ein Element 7 verbindet die positive oder negative Hochspannung mit der APD. Dieses Element sollte im interessanten Frequenzbereich vorteilhaft eine deutlich höhere Impedanz als die Eingangsimpedanz des Transimpedanzverstärkers aufweisen und kann dann für die transienten Vorgänge vernachlässigt werden. Beispielsweise können dafür ein hochohmiger Widerstand oder andere aus dem Stand der Technik bekannte und dafür geeignete Elemente verwendet werden.

Es bestehen jedoch auch weitere, dem Fachmann bekannte Möglichkeiten um das Empfangselement mit der Transimpedanzverstärkerschaltung zu verbinden.

Zudem zeigt Figur 5 eine spezielle Ausführung der in Figur 2 dargestellten Ausführungsform, wobei nun im dritten Zweig des Rückkopplungsnetzwerks kein Widerstand - bzw. virtuell ein Widerstand mit unendlich hohem Widerstandswert - angeordnet ist. Diese spezielle Ausführungsform verdeutlicht die erfindungsgemäss erreichbaren Vorteile, insbesondere das dabei realisierbare geringere Eingangsstromrauschen.

Der zweite und der dritte Zweig weisen dabei jeweils ausschliesslich einen Kondensator mit der Kapazität $C_2$ bzw. $C_3$ und somit mit der Impedanz $Z_2=1/i\omega C_2$ bzw. $Z_3=1/i\omega C_3$ auf. Der erste Zweig ist - wie in den vorherigen Ausführungsbeispielen - mit einem verhältnismässig geringen Widerstand $R_1$ aufgebaut, sodass dessen durch seine Parallelkapazität $C_{R1}$ begrenzte Bandbreite nicht limitierend wirkt.

Die Transimpedanz $Z_{EQ}$ ist in Abhängigkeit von der Frequenz in einem Diagramm in Figur 7 als durchgezogene Linie dargestellt. Dabei ergibt sich ein Bereich zwischen einer unteren Grenzfrequenz $f_L$, z.B. 10MHz, und einer oberen Grenzfrequenz $f_H$, z.B. 100MHz, in dem die Transimpedanz $Z_{EQ}$ im Wesentlichen konstant ist, mit

$$f_L = \frac{1}{2\pi \cdot R_1 (C_3 + C_2)} \quad \text{und} \quad f_H = \frac{A}{2\pi \cdot R_1 \cdot C_2 (\frac{C_{in}}{C_3} + \frac{C_{in}}{C_2} + 1)},$$

wobei $C_{in}$ die Eingangskapazität darstellt, welche durch die Summe aus $C_{EE}$ und der Eingangskapazität des Verstärkerelementes gegeben ist. A gibt den Geradeausverstärkungsfaktor des Verstärkerelements 4 an.

Als reelle Transimpedanz $R_{EQ}$ ergibt sich in diesem Bereich zwischen $f_L$ und $f_H$ näherungsweise:

$$R_{EQ} = R_1\left(\frac{C_3 + C_2}{C_3}\right) = R_1 * G, \quad \text{mit} \quad G = \frac{C_3 + C_2}{C_3}.$$

Der Strom durch den ersten Zweig - der das durch den Rückkopplungswiderstand erzeugte Stromrauschen beinhaltet - wird durch diese Schaltungsanordnung erfindungsgemäss am Knotenpunkt K im Verhältnis 1:G kapazitiv aufgeteilt, sodass sich ein Eingangsstromrauschen $I_{noise}$ wie folgt ergibt:

$$I_{noise} = \frac{\sqrt{\frac{4kT}{R_1}}}{G} = \sqrt{\frac{4kT}{R_1 \cdot G^2}} = \sqrt{\frac{4kT}{R_{EQ} \cdot G}}.$$

Je grösser G durch die Kapazitäten $C_2$ und $C_3$ definiert ist, desto kleiner ist das Eingangsstromrauschen $I_{noise}$.

Erfindungsgemäss kann nun ein sehr geringer Rückkopplungswiderstand $R_1$ gewählt werden, sodass dessen parasitäre Parallelkapazität $C_{R1}$ nicht limitierend für höhere Frequenzen wirkt. Zusätzlich kann auch - z.B. zur Kompensation einer Überhöhung der Verstärkung um $f_H$ - ein Kondensator $C_{K1}$ parallel zum Rückkopplungswiderstand $R_1$ geschaltet werden um den Verstärkungsfaktorverlauf definiert einzustellen. Der Kompensationskondensator $C_{K1}$ kann jedoch im Vergleich zu Kompensationskondensatoren, die bei Schaltungen des Standes der Technik verwendet werden, eine höhere Kapazität aufweisen, wodurch die Schaltung weniger aufwändig realisierbar ist.

Der bei Schaltungen des Standes der Technik bestehende Nachteil bei der Verwendung eines niederohmigen Rückkopplungswiderstands $R_1$, dass dadurch ein entsprechend hohes Eingangsrauschen bedingt wird, kann durch die kapazitive Stromteilung am Knotenpunkt K überkompensiert werden, sodass ein vielfach geringeres Eingangsstromrauschen $I_{noise}$ realisierbar ist als bei dem in Figur 1 gezeigten Transimpedanzverstärker bei äquivalenter Transimpedanz.

Als Kompromiss ergibt sich allerdings, dass für Frequenzen kleiner $f_L$ die Transimpedanz ansteigt, bis die Leerlaufverstärkung des Verstärkerkerns erreicht ist, und dass - wie bereits oben erwähnt - ein höherer Strom vom Verstärkerelement in das Rückkopplungsnetzwerk fliesst als bei bisher bekannten, üblichen Schaltungen.

Um den Anstieg der Verstärkung bei tiefen Frequenzen mindestens teilweise zu kompensieren, kann z.B. der Verstärkerkern mit einer Hochpasscharakteristik bei tiefen Frequenzen aufgebaut oder aber, wie bereits in den Figuren 2 und 3 und der dazugehörigen Beschreibung erläutert, im dritten Zweig ein Widerstand $R_3$ eingefügt werden.

Da durch die erfindungsgemäss erreichbare Reduzierung des durch den Rückkopplungswiderstand erzeugten Stromrauschens das Gesamtrauschen der Schaltung nun vor allem vom Rauschen des Verstärkerkerns dominiert wird, kann insbesondere als erstes Element des Verstärkerkerns 4 ein HEMT gewählt werden, da dieser sehr rauscharm ist.

Der Transimpedanzverstärker kann - wie in den obigen Figuren bereits gezeigt - insbesondere für Photodetektoren verwendet werden, wobei diese beispielsweise im Bereich der Laserentfernungsmesser Anwendung finden. Dazu wird das photosensitives Empfangselement EE mit dem Verstärkerelement 4 verbunden, sodass der durch dieses Empfangselement EE in Abhängigkeit von dessen Beleuchtung generierte Eingangsstrom zum Signaleingang des Verstärkerelements 4 geleitet wird. Die gezeigte Transimpedanzverstärkerschaltung wandelt den generierten Eingangsstrom auch für hohe Frequenzen näherungsweise linear und mit geringem Rauschen in eine messbare Ausgangsspannung um.

Figur 6 zeigt eine weitere Ausführungsform der erfindungsgemässen Transimpedanzverstärkerschaltung, wobei - im Unterschied zu Figur 5 - das Empfangselement - ähnlich zu der in Figur 3 gezeigten Ausführung - im dritten Zweig des Rückkopplungsnetzwerks eingefügt ist und sich als reelle Transimpedanz $R_{EQ}$ in einem Frequenzbereich zwischen $f_L$ und $f_H$ näherungsweise ergibt:

$$R_{EQ} = R_1 \frac{C_2}{C_3} = R_1 \cdot G, \quad \text{mit} \quad G = \frac{C_2}{C_3},$$

wobei nun

$$f_L = \frac{1}{2\pi \cdot R1 \cdot C2} \quad \text{und} \quad f_H = \frac{A}{2\pi \cdot R1 \cdot C2} = A \cdot f_L \; .$$

Der zweite Zweig weist ausschliesslich einen Kondensator mit der Kapazität $C_2$ auf und der dritte Zweig das Empfangselement mit der Parallelkapazität $C_{EE}$.

Es ist möglich, dass der dritte Zweig ausschliesslich das Empfangselement EE aufweist und somit die Parallelkapazität $C_{EE}$ alleinig die Kapazität $C_3$ des dritten Zweiges darstellt. Insbesondere kann jedoch auch zusätzlich zur Parallelkapazität $C_{EE}$ des Empfangselements EE ein Kondensator mit der Kapazität $C_{K3}$ parallel zum Empfangselement EE geschaltet werden, sodass sich eine Kapazität $C_3 = C_{EE} + C_{K3}$ im dritten Zweig ergibt.

Werden als Empfangselement EE beispielsweise eine pin-Diode oder CMOS-Sensoren verwendet, so ist es nicht notwendig an dieses eine Hochspannung anzulegen.

Bei der in den Figuren 5 und 6 gezeigten Alternative ohne Widerstand im dritten Zweig des Rückkopplungsnetzwerks kann beispielsweise ein Biasstrom für das Empfangselement durch ein externes Element zugeführt werden. Bei einem diskreten Aufbau kann jedoch auch direkt das Bias-Netzwerk des Eingangtransistors des Verstärkerkerns dafür verwendet werden.

Die Schaltungsanordnungen aus den Figuren 3 und 6 haben den Vorteil, dass die vom Verstärkereingang gesehene Kapazität kleiner sein kann als bei den Schaltungsanordnungen aus den Figuren 2 und 5. Dies ist besonders bei schnellen Transimpedanzverstärkern wichtig, da das Rauschen, welches durch das Eingangsspannungsrauschen des Verstärkerelementes verursacht wird, bei hohen Frequenzen proportional zur Eingangskapazität ansteigt.

Weiter reduziert werden kann die Eingangskapazität, wenn sich Verstärkerkern und das Photoelement auf dem gleichen Die befinden. Beispielsweise können Chip-Technologien gemischt werden, indem verschiedene Dies im gleichen Gehäuse durch Bonden verbunden werden und somit die Kapazitäten klein gehalten wird. Ebenso ist dabei bekannt, auf einem Standart CMOS Prozess Pindiode und Verstärker zu vereinen oder ein Photoelement mit einem auf einer rauscharmen Technologie aufgebauten Verstärkerkern zusammen zu "bonden". Werden dabei Phototransistoren als Photoelemente verwendet, kann das Rauschen des Verstärkers zusätzlich in bekannter Weise reduziert werden.

Figur 7 zeigt ein Diagramm, in dem der von der Transimpedanz bestimmte Verstärkungsfaktor VF in Abhängigkeit der Frequenz aufgetragen ist, wobei die durchgezogene Linie den Verstärkungsfaktor $VF_{Fig5,6}$ für eine erfindungsgemässe Transimpedanzverstärkerschaltung nach Figur 5 oder 6 und die gestrichelte Linie den Verstärkungsfaktor $VF_{Fig1}$ der in Figur 1 gezeigten, nach dem Stand der Technik bekannten Schaltung mit einem höheren Eingangsrauschen aufzeigt.

Die Transimpedanz der erfindungsgemässen Transimpedanzverstärkerschaltung in der in den Figuren 5 und 6 gezeigten Ausführungsform ist auch noch für höhere Frequenzen bis zur Frequenz $f_H$ näherungsweise konstant. Allerdings steigt die Transimpedanz für Frequenzen $f<f_L$ an, bis die Leerlaufverstärkung des Verstärkerkerns erreicht ist. Insbesondere bei einer Anwendung des Transimpedanzverstärkers in einem Photodetektor für einen Laserentfernungsmesser deckt der Frequenzbereich, in dem die Verstärkung näherungsweise konstant ist, den für Entfernungsmesser relevanten Frequenzbereich ab, sodass sich durch den Anstieg der Transimpedanz für kleinere Frequenzen keine Nachteile ergeben. Somit ist durch das erfindungsgemäss ermöglichte geringe Stromrauschen und das ermöglichte Nutzen von höheren Frequenzen eine genauere Entfernungsmessung realisierbar.

Figuren 8 und 9 zeigen rein beispielhaft Simulationsschaltungen mit diskret festgelegten Werten für die einzelnen bei der Simulation verwendeten Komponenten. In Figur 8 ist dabei eine Transimpedanzverstärkerschaltung des Standes der Technik gezeigt und in Figur 9 eine Transimpedanzverstärkerschaltung ähnlich der in Figur 5 gezeigten erfindungsgemässen Ausführungsform. Die sich bei der Simulation der dargestellten Schaltungen ergebenden Verstärkungsfaktoren VF, die durch die jeweiligen Transimpedanzen bestimmt sind, sowie das sich jeweils ergebende Stromrauschen sind in einem Diagramm in Figur 10 in Abhängigkeit von der Frequenz f dargestellt.

Als Stromquelle 5 wird jeweils eine ideale Wechselstromquelle mit einem generierten Strom von $I_{in}=1\mu A$ angenommen, wobei zur Simulation der parallelen Kapazität eines photosensitiven Empfangselements parallel zu dieser Stromquelle 5 eine Kapazität von $C_{in}=2pF$ angenommen wird. Als Verstärkerelement 4 ist jeweils ein idealer Spannungsverstärker mit einer Verstärkung von -300 angeordnet.

In der Schaltung in Figur 8 ist ein Rückkopplungswiderstand $R_f=30k\Omega$ mit der parasitären Parallelkapazität $C_{Rf}=0.1pF$ angeordnet, wobei sich somit im relevanten Frequenzbereich näherungsweise eine Transimpedanz von $Z_{EQ,Fig8}=R_f=30k\Omega$ ergibt.

Dagegen weist die erfindungsgemässe Schaltung in Figur 9 ein T-förmiges Rückkopplungsnetzwerk mit dem Widerstand $R_1=300\Omega$ mit der Parallelkapazität $C_{R1}=0.1pF$ sowie der Kapazität $C_2=198pF$ und der Kapazität $C_3=2pF$ auf, sodass sich ebenso als Transimpedanz $Z_{EQ}$ in einem relevanten Frequenzbereich näherungsweise ergibt:

$$Z_{EQ.Fig9} = R_1\left(\frac{C_3 + C_2}{C_3}\right) = R_1 \cdot G = 300\Omega \cdot 100 = 30k\Omega \ .$$

In Figur 10 sind jeweils die durch die Transimpedanz $Z_{E\Omega}$ bestimmte Verstärkung VF und das Stromrauschen $I_{noise}$ für die Schaltungen der Figuren 8 und 9 in Abhängigkeit der Frequenz f aufgezeigt.

Wie bereits erläutert kann erfindungsgemäss ein Abfall des durch die Transimpedanz $Z_{EQ,Fig9}$ bestimmten Verstärkungsfaktors $VF_{Fig9}$ für höhere Frequenzen hinausgezögert werden, wohingegen allerdings der Verstärkungsfaktor $VF_{Fig9}$ für kleinere Frequenzen zunimmt. In einem für viele Anwendungen relevanten Frequenzbereich ist dieser konstant und näherungsweise gleich dem Verstärkungsfaktor $VF_{Fig8}$ der Schaltung aus Figur 8.

Des Weiteren zeigt das Diagramm, dass im relevanten Frequenzbereich das durch den Rückkopplungswiderstand bedingte Stromrauschen $I_{noise,Fig9} \approx 0{,}07pA$ der Schaltung aus Figur 9 gegenüber dem Stromrauschen $I_{noise,Fig8} \approx 0{,}7pA$, das sich bei der Schaltung aus Figur 8 ergibt, mittels der erfindungsgemässen kapazitiven Stromteilung um den Faktor 1/Wurzel(G)=1/Wurzel(100)=1/10 reduziert werden kann.

Das Stromrauschen $I_{noise,Fig9}$ ist beispielsweise so gering, dass es im Verhältnis zu anderen Rauschquellen eines realen Tränsimpedanzverstärkers, wie z.B. ein Spannungsrauschen des Verstärkerelements, vernachlässigbar ist.

Figur 11 zeigt eine weitere Ausführungsform für eine erfindungsgemässe Transimpedanzverstärkerschaltung.

Dabei ist nun parallel zum T-förmigen Rückkopplungsnetzwerk - mit dem ersten Zweig 1, dem zweiten Zweig 2 und dem dritten Zweig 3 - ein zweiter Rückkopplungspfad 9 mit einem zweiten Verstärkerelement 8 vorgesehen. Rein beispielhaft kann als das zweite Verstärkerelement 8 ein Operationsverstärker verwendet werden.

Durch das Anordnen dieses zweiten, aktiven Rückkopplungspfads 9 kann das - in Diagramm in Figur 7 gezeigte - Ansteigen der Transimpedanz bei tiefen Frequenzen unterhalb $f_L$ verhindert werden. Das zweite Verstärkerelement 8 verstärkt dabei den Ausgang $U_{out}$ bei tiefen Frequenzen um den Verstärkungsfaktor B dieses zweiten Verstärkerelements 8. Vom Ausgang des Verstärkerelements 8 kann das Signal nun im Speziellen mit einem um den Faktor B höheren Widerstand als die geforderte Transimpedanz zum Eingang des Transimpedanzverstärkers zurückgeführt werden. Dieser zweite Feedbackpfad 9 kann vorteilhaft mit einer oberen Grenzfrequenz ausgelegt sein, die der unteren Grenzfrequenz des T-förmigen Rückkopplungsnetzwerks entspricht.

Zum Beispiel kann das zweite Verstärkerelement 8 so konfiguriert sein, dass der Verstärkungsfaktor B den in Figur 13 dargestellten Frequenzgang des Verstärkungsfaktors $VF_B$ aufweist. Wie im Diagramm in Figur 12 veranschaulicht kann dadurch der Anstieg des Verstärkungsfaktors $VF_{Fig11}$ des gesamten Transimpedanzverstärkers für Frequenzen unterhalb der Frequenz $f_L$ verhindert werden.

Alternativ kann der zweite, aktive Rückkopplungspfad 9 auch derart ausgelegt werden, dass der Transimpedanzverstärker eine Bandpassfunktion erfüllt. Dadurch kann zum Beispiel erreicht werden, dass der DC Strom nicht am Ausgang des Transimpedanzverstärkers zu sehen ist, da solche Frequenzen ausgefiltert werden. Dafür kann das zusätzliche, zweite Verstärkerelement 8 insbesondere so ausgelegt sein, dass der Verstärkungsfaktor B den in Figur 13 dargestellten zweiten Frequenzgang $VF_{B;2}$ aufweist. Für Frequenzen unterhalb der Frequenz $f_{LL}$ nimmt dabei der Verstärkungsfaktor $VF_{B;2}$ des zweiten Rückkopplungspfads zu, sodass der Verstärkungsfaktor $VF_{Fig11;2}$ des gesamten Transimpedanzverstärkers - wie in Figur 12 dargestellt - unterhalb der Frequenz $f_{LL}$ abnimmt und somit die Bandpassfunktion bereitgestellt wird.

Zu Vergleichszwecken ist in Figur 12 ausserdem - als gestrichelte Linie - der Verstärkungsfaktor $VF_{Fig1}$ für den nach dem Stand der Technik bekannten und in Figur 1 gezeigten Transimpedanzverstärker mit einem höheren Eingangsrauschen dargestellt.

Es versteht sich, dass diese dargestellten Figuren nur Beispiele möglicher Ausführungsformen darstellen. Dabei wird aus Gründen einer klareren Darstellung der erfindungswesentlichen Elemente auf eine Darstellung weiterer fachüblicher Komponenten verzichtet, insbesondere bei den gezeigten Kleinsignalersatzschaltbildern. Beispielsweise können zusätzlich DC Arbeitspunkt Einstellungen vorgenommen werden oder in einer praktischen Realisierung der Knotenpunkt K mit einem Entkoppelkondensator von $U_{out}$ getrennt sowie am Punkt K und am Eingang des Verstärkerelementes die Vorspannung für das Photoelement eingestellt werden.

**Patentansprüche**

1. Transimpedanzverstärkerschaltung zur Umwandlung eines Eingangsstroms in eine Ausgangsspannung $U_{out}$, mit

  ● einem Verstärkerelement (4) mit

☐ mindestens einem Signaleingang und
☐ einem Ausgang mit der Ausgangsspannung $U_{out}$,
und

● einem T-förmigen Rückkopplungsnetzwerk, das aufgeteilt ist in mindestens einen ersten Zweig (1), einen zweiten Zweig (2) und einen zum ersten Zweig (1) in Reihe geschalteten dritten Zweig (3), sodass sich ein Knotenpunkt (K) ergibt, wobei der erste Zweig (1)

☐ einen ohmschen Widerstand $R_1$ aufweist und
☐ einerseits mit dem Ausgang und andererseits dem Knotenpunkt (K) verbunden ist,

**dadurch gekennzeichnet, dass**
● der zweite Zweig (2)

☐ mindestens eine Kapazität $C_2$ aufweist und
☐ einerseits mit dem Knotenpunkt (K) und insbesondere andererseits mit einer Masse verbunden ist, und

● der dritte Zweig (3)

☐ mindestens eine Kapazität $C_3$ aufweist, und
☐ einerseits mit dem Knotenpunkt (K) und andererseits dem Signaleingang verbunden ist,

sodass am Knotenpunkt (K) eine kapazitive Stromteilung erfolgt.

2. Transimpedanzverstärkerschaltung nach Anspruch 1,
**dadurch gekennzeichnet, dass**
der zweite Zweig (2) ausschliesslich Kapazitäten und insbesondere ausschliesslich einen Kondensator als Kapazität $C_2$ aufweist.

3. Transimpedanzverstärkerschaltung nach Anspruch 1 oder 2,
**dadurch gekennzeichnet, dass**
der dritte Zweig (3) ausschliesslich Kapazitäten, insbesondere ausschliesslich einen Kondensator als Kapazität $C_3$, aufweist.

4. Transimpedanzverstärkerschaltung nach einem der vorangehenden Ansprüche,
**dadurch gekennzeichnet, dass**

● eine durch die Transimpedanzverstärkerschaltung definierte Transimpedanz $R_{EQ}$ für Wechselstromfrequenzen in einem Bereich zwischen einer unteren Grenzfrequenz $f_L$ und einer oberen Grenzfrequenz $f_H$ im Wesentlichen konstant ist und
● für ein durch die Transimpedanzverstärkerschaltung definiertes Stromrauschen $I_{noise}$ gilt:

$$I_{noise} < Wurzel(4kT/R_{EQ}).$$

5. Transimpedanzverstärkerschaltung nach Anspruch 1 oder 2,
**dadurch gekennzeichnet, dass**
der dritte Zweig (3) einen ohmschen Widerstand $R_3$ aufweist.

6. Transimpedanzverstärkerschaltung nach Anspruch 5,
**dadurch gekennzeichnet, dass**
der dritte Zweig (3) zusätzlich einen zum ohmschen Widerstand $R_3$ parallel geschalteten Kondensator aufweist.

7. Transimpedanzverstärkerschaltung nach Anspruch 5 oder 6,
**dadurch gekennzeichnet, dass**
eine durch die Transimpedanzverstärkerschaltung definierte Transimpedanz $R_{EQ}$ für Wechselstromfrequenzen in einem Bereich bis zu einer oberen Grenzfrequenz $f_H$ im Wesentlichen konstant ist.

**8.** Transimpedanzverstärkerschaltung nach einem der vorangehenden Ansprüche,
**dadurch gekennzeichnet, dass**
das Verstärkerelement (4) als einen Eingangstransistor einen High Electron Mobility Transistor aufweist.

**9.** Transimpedanzverstärkerschaltung nach einem der vorangehenden Ansprüche,
**dadurch gekennzeichnet, dass**
das Verstärkerelement (4) als Operationsverstärker ausgebildet ist mit

- einem Operationsverstärker-Signaleingang als Signaleingang,
- einem Operationsverstärker-Referenzeingang, insbesondere wobei dieser mit einer Masse verbunden ist, und
- einem Operationsverstärker-Ausgang als Ausgang.

**10.** Transimpedanzverstärkerschaltung nach einem der vorangehenden Ansprüche,
**dadurch gekennzeichnet, dass**
die Transimpedanzverstärkerschaltung mindestens teilweise als integrierte Schaltungsanordnung ausgebildet ist.

**11.** Transimpedanzverstärkerschaltung nach einem der vorangehenden Ansprüche,
**dadurch gekennzeichnet, dass**
die Transimpedanzverstärkerschaltung diskret aufgebaut ist.

**12.** Transimpedanzverstärkerschaltung nach einem der vorangehenden Ansprüche,
**dadurch gekennzeichnet, dass**
parallel zum T-förmigen Rückkopplungsnetzwerk ein zweiter Rückkopplungspfad (9) mit einem zweiten Verstärkerelement (8) geschaltet ist, insbesondere wobei die oberen Grenzfrequenz des zweiten Rückkopplungspfades (9) der unteren Grenzfrequenz ($f_L$) des T-förmigen Rückkopplungsnetzwerks entspricht.

**13.** Photodetektor, insbesondere für entfernungsmessende Elektronik, mit

- einem photosensitiven Empfangselement (EE) zur Generierung eines von der Beleuchtung desselben abhängigen Eingangsstroms, insbesondere einer Photodiode, einer pin-Diode, einer Avalanche Photodiode, einem Phototransistor oder CMOS-Sensoren, oder einer Zeilen- oder Flächenanordnung von solchen Empfangselementen, und
- einer Transimpedanzverstärkerschaltung nach einem der Ansprüche 1 bis 12 zum Umwandeln des Eingangsstroms in eine messbare Ausgangsspannung, wobei das Empfangselement (EE) mit dem Signaleingang verbunden ist.

**14.** Photodetektor nach Anspruch 13,
**dadurch gekennzeichnet, dass**
das Empfangselement (EE) im dritten Zweig (3) parallel zur Kapazität $C_3$ geschaltet ist oder die Parallelkapazität ($C_{EE}$) des Empfangselements (EE) selbst die Kapazität $C_3$ darstellt.

**15.** Photodetektor nach Anspruch 13 oder 14,
**dadurch gekennzeichnet, dass**
das Empfangselement (EE) und die Transimpedanzverstärkerschaltung mindestens teilweise auf einem gemeinsamen Chip aufgebaut sind.

**16.** Photodetektor nach einem der Ansprüche 13 bis 15,
**dadurch gekennzeichnet, dass**
das Empfangselement (EE) und die Transimpedanzverstärkerschaltung mindestens teilweise in einem gemeinsamen Gehäuse angeordnet und durch Bonden verbunden sind.

**Claims**

**1.** Transimpedance amplifier circuit for converting an input current into an output voltage $U_{out}$, having

● an amplifier element (4) with

□ at least one signal input and
□ an output with the output voltage $U_{out}$,
and

● a T-shaped feedback network which is divided into at least a first branch (1), a second branch (2) and a third branch (3) connected in series with the first branch (1), thus resulting in a node (K), the first branch (1)

□ having a non-reactive resistor $R_1$ and
□ being connected, on the one hand, to the output and, on the other hand, to the node (K),

**characterized in that**
● the second branch (2)

□ has at least one capacitance $C_2$ and
□ is connected, on the one hand, to the node (K) and, on the other hand, to earth, in particular,

and
● the third branch (3)

□ has at least one capacitance $C_3$ and
□ is connected, on the one hand, to the node (K) and, on the other hand, to the signal input,

with the result that capacitive current division is carried out at the node (K).

2. Transimpedance amplifier circuit according to Claim 1,
**characterized in that**
the second branch (2) exclusively has capacitances and, in particular, exclusively has a capacitor as the capacitance $C_2$.

3. Transimpedance amplifier circuit according to Claim 1 or 2,
**characterized in that**
the third branch (3) exclusively has capacitances, in particular exclusively a capacitor as the capacitance $C_3$.

4. Transimpedance amplifier circuit according to any one of the preceding claims,
**characterized in that**

● a transimpedance $R_{EQ}$ which is defined by the transimpedance amplifier circuit is substantially constant for AC frequencies in a range between a lower cut-off frequency $f_L$ and an upper cut-off frequency $f_H$, and
● the following applies to a current noise $I_{noise}$ defined by the transimpedance amplifier circuit:

$$I_{noise} < root\ (4kT/R_{EQ}).$$

5. Transimpedance amplifier circuit according to Claim 1 or 2,
**characterized in that**
the third branch (3) has a non-reactive resistor $R_3$.

6. Transimpedance amplifier circuit according to Claim 5,
**characterized in that**
the third branch (3) additionally has a capacitor connected in parallel with the non-reactive resistor $R_3$.

7. Transimpedance amplifier circuit according to Claim 5 or 6,
**characterized in that**
a transimpedance $R_{EQ}$ defined by the transimpedance amplifier circuit is substantially constant for AC frequencies in a range up to an upper cut-off frequency $f_H$.

8. Transimpedance amplifier circuit according to any one of the preceding claims,
**characterized in that**
the amplifier element (4) has a high electron mobility transistor as an input transistor.

9. Transimpedance amplifier circuit according to any one of the preceding claims,
**characterized in that**
the amplifier element (4) is in the form of an operational amplifier with

● an operational amplifier signal input as the signal input,
● an operational amplifier reference input, this input being connected to earth in particular, and
● an operational amplifier output as the output.

10. Transimpedance amplifier circuit according to any one of the preceding claims,
**characterized in that**
the transimpedance amplifier circuit is at least partially in the form of an integrated circuit arrangement.

11. Transimpedance amplifier circuit according to any one of the preceding claims,
**characterized in that**
the transimpedance amplifier circuit has a discrete design.

12. Transimpedance amplifier circuit according to any one of the preceding claims,
**characterized in that**
a second feedback path (9) having a second amplifier element (8) is connected in parallel with the T-shaped feedback network, the upper cut-off frequency of the second feedback path (9) corresponding to the lower cut-off frequency ($f_L$) of the T-shaped feedback network in particular.

13. Photodetector, in particular for distance-measuring electronics, having

● a photosensitive receiving element (EE) for generating an input current which is dependent on the illumination of the receiving element, in particular a photodiode, a pin diode, an avalanche photodiode, a phototransistor or CMOS sensors, or a row or area arrangement of such receiving elements, and
● a transimpedance amplifier circuit according to one of Claims 1 to 12 for converting the input current into a measurable output voltage, the receiving element (EE) being connected to the signal input.

14. Photodetector according to Claim 13,
**characterized in that**
the receiving element (EE) in the third branch (3) is connected in parallel with the capacitance $C_3$, or the parallel capacitance ($C_{EE}$) of the receiving element (EE) itself constitutes the capacitance $C_3$.

15. Photodetector according to Claim 13 or 14,
**characterized in that**
the receiving element (EE) and the transimpedance amplifier circuit are at least partially constructed on a common chip.

16. Photodetector according to any one of Claims 13 to 15,
**characterized in that**
the receiving element (EE) and the transimpedance amplifier circuit are at least partially arranged in a common housing and are connected by means of bonding.

**Revendications**

1. Circuit amplificateur à impédance transversale pour transformer un courant d'entrée en une tension de sortie $U_{out}$, avec

● un élément amplificateur (4) avec

◦ au moins une entrée de signal et

∘ une sortie avec la tension de sortie $U_{out}$,

et

● un réseau à rétroaction en forme de T qui est divisé en au moins une première branche (1), une seconde branche (2) et une troisième branche (3) montée en série avec la première branche (1) si bien que l'on obtient un point nodal (K), la première branche (1)

∘ présentant une résistance ohmique R1 et
∘ étant reliée d'une part à la sortie et d'autre part au point nodal (K),

**caractérisé en ce que**
● la seconde branche (2) présente

∘ au moins une capacité $C_2$ et
∘ est reliée d'une part au point nodal (K) et en particulier d'autre part à une masse

et
● la troisième branche (3) présente

∘ au moins une capacité $C_3$ et
∘ est reliée d'une part au point nodal (K) et d'autre part à l'entrée de signal

si bien qu'une répartition capacitive du courant se fait au point nodal (K).

2. Circuit amplificateur à impédance transversale selon la revendication 1,
**caractérisé en ce**
**que** la seconde branche (3) présente uniquement des capacités et en particulier uniquement un condensateur comme capacité $C_2$.

3. Circuit amplificateur à impédance transversale selon la revendication 1 ou 2,
**caractérisé en ce**
**que** la troisième branche (3) présente uniquement des capacités, en particulier uniquement un condensateur comme capacité $C_3$.

4. Circuit amplificateur à impédance transversale selon l'une des revendications précédentes,
**caractérisé en ce**

● **qu'**une impédance transversale $R_{E\Omega}$ définie par le circuit amplificateur à impédance transversale est substantiellement constante pour des fréquences de courant alternatif dans une plage entre une fréquence seuil inférieure $f_L$ et une fréquence seuil supérieure $f_H$ et
● on applique pour un bruit de courant $I_{noise}$ défini par le circuit amplificateur à impédance transversale :

$$I_{noise} < \text{Racine} (4kT/R_{E\Omega}).$$

5. Circuit amplificateur à impédance transversale selon la revendication 1 ou 2,
**caractérisé en ce**
**que** la troisième branche (3) présente une résistance ohmique $R_3$.

6. Circuit amplificateur à impédance transversale selon la revendication 5,
**caractérisé en ce**
**que** la troisième branche (3) présente en plus un condensateur monté en parallèle avec la résistance ohmique $R_3$.

7. Circuit amplificateur à impédance transversale selon la revendication 5 ou 6,
**caractérisé en ce**
**qu'**une impédance transversale $R_{E\Omega}$ définie par le circuit amplificateur à impédance transversale est substantiellement constante pour des fréquences de courant alternatif dans une plage jusqu'à une fréquence seuil supérieure $f_H$.

**8.** Circuit amplificateur à impédance transversale selon l'une des revendications précédentes,
**caractérisé en ce**
**que** l'élément amplificateur (4) présente un High Electron Mobility Transistor comme transistor d'entrée.

**9.** Circuit amplificateur à impédance transversale selon l'une des revendications précédentes,
**caractérisé en ce**
**que** l'élément amplificateur (4) est configuré comme un amplificateur opérationnel avec

- une entrée de signal d'amplificateur opérationnel comme entrée de signal,
- une entrée de référence d'amplificateur opérationnel, en particulier celui-ci étant relié à une masse et
- une sortie d'amplificateur opérationnel comme sortie.

**10.** Circuit amplificateur à impédance transversale selon l'une des revendications précédentes,
**caractérisé en ce**
**que** le circuit amplificateur à impédance transversale est configuré au moins partiellement comme un montage de circuit intégré.

**11.** Circuit amplificateur à impédance transversale selon l'une des revendications précédentes,
**caractérisé en ce**
**que** le circuit amplificateur à impédance transversale a une structure discrète.

**12.** Circuit amplificateur à impédance transversale selon l'une des revendications précédentes,
**caractérisé en ce**
**qu'**un second chemin de rétroaction (9) avec un second élément amplificateur (8) est mis en circuit parallèlement au réseau à rétroaction en forme de T, en particulier la fréquence seuil supérieure du second chemin de rétroaction (9) correspondant à la fréquence seuil inférieure ($f_L$) du réseau à rétroaction en forme de T.

**13.** Photodétecteur, en particulier pour une électronique de mesure de distance, avec

- un élément de réception photosensible (EE) pour générer un courant d'entrée dépendant de l'éclairage de celui-ci, en particulier d'une photodiode, d'une diode PIN, d'une photodiode à avalanche, d'un phototransistor ou de capteurs CMOS ou d'un arrangement en ligne ou en surface de tels éléments de réception et
- un circuit amplificateur à impédance transversale selon l'une des revendications 1 à 12 pour transformer le courant d'entrée en une tension de sortie mesurable, l'élément de réception (EE) étant relié à l'entrée de signal.

**14.** Photodétecteur selon la revendication 13,
**caractérisé en ce**
**que** l'élément de réception (EE) est mis en circuit dans la troisième branche (3) parallèlement avec la capacité $C_3$ ou que la capacité parallèle ($C_{EE}$) de l'élément de réception (EE) constitue elle-même la capacité $C_3$.

**15.** Photodétecteur selon la revendication 13 ou 14,
**caractérisé en ce**
**que** l'élément de réception (EE) et le circuit amplificateur à impédance transversale sont montés au moins partiellement sur une puce commune.

**16.** Photodétecteur selon l'une des revendications 13 à 15,
**caractérisé en ce**
**que** l'élément de réception (EE) et le circuit amplificateur à impédance transversale sont placés au moins partiellement dans un boîtier commun et sont reliés par des bondes.

$R_f$

-A

$U_{out}$

4

5

$\mathcal{F}ig.\ 1$

$C_3$

$C_{R1}$

K

3

1

$R_3$

2

-A

$U_{out}$

$C_2$

$R_1$

4

$C_{EE}$

EE

$\mathcal{F}ig.\ 2$

**Fig. 3**

**Fig. 4**

HV

$C_3$ K $R_1$

$C_2$

EE

7

6 $c_{EE}$

4 -A $U_{out}$

$\mathfrak{Fig}.\ 5$

EE

K $C_{R1}$

$C_{EE}$

$C_2$

$R_1$

-A $U_{out}$

$\mathfrak{Fig}.\ 6$

$\mathcal{F}ig. 7$

*Fig.* 8

*Fig.* 9

*Fig.* 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0246779 A1
- US 5455705 A
- US 4535233 A

**In der Beschreibung aufgeführte Nicht-Patentliteratur**

- **JERALD G. GRAEME.** Photodiode Amplifiers. Verlag McGraw-Hill, 1996, 21-30